Europäisches Patentamt

European Patent Office

Office européen des brevets

(19)

(11) Numéro de publication: **0 082 227**
**A1**

(12) **DEMANDE DE BREVET EUROPEEN**

(21) Numéro de dépôt: 81402025.1

(22) Date de dépôt: 17.12.81

(51) Int. Cl.³: **B 24 B 27/06**

(43) Date de publication de la demande:
29.06.83 Bulletin 83/26

(84) Etats contractants désignés:
AT BE CH DE GB IT LI NL SE

(71) Demandeur: Tostain, Jacques Paul Jean
11 bis, rue du Belvedère
F-92100 Boulogne(FR)

(72) Inventeur: Tostain, Jacques Paul Jean
11 bis, rue du Belvedère
F-92100 Boulogne(FR)

(74) Mandataire: Martin, Jean-Jacques et al,
Cabinet REGIMBEAU 26, Avenue Kléber
F-75116 Paris(FR)

(54) **Système de rattrapage d'usure de meule sur tronçonneuses automatiques.**

(57) Un système comprend un bras oscillant avec d'un côté une meule (2) au dessus d'une pièce à tronçonner (1). Le bras est équilibré de telle sorte que le poids côté meule (2) l'emporte sur le poids côté moteur. A l'autre extrêmité du bras oscillant se trouve une bague articulée (5) traversée par la tige d'un vérin (9) et supportant un capteur (6). Le vérin peut être monté en parallèle avec un régulateur hydraulique (10). Parallèlement à l'axe du vérin est fixé un étrier (16) dont les deux bagues (14) et (15) viennent rencontrer un coulisseau (11) solidaire d'un capteur (17). Pendant le tronçonnage le capteur (6) s'arme. A la fin du tronçonnage, la meule (2), emportée par son poids, agit sur le capteur (6) qui commande son relevage.

La position du bras en fin de tronçonnage, qui est variable selon le degré d'usure de la meule (2), détermine le glissement dur d'un coulisseau (11) entrainé par la bague (15). Au relevage l'étrier (16) vient rencontrer le capteur (17), fixé sur le coulisseau (11), qui donne l'ordre de blocage du système au point haut.

FIG.1

EP 0 082 227 A1

La présente invention concerne un système simple permettant, sur une tronçonneuse automatique à meule, de régler automatiquement le course utile de la meule en tenant compte de la diminution de diamètre de celle-ci du fait de son usure.

Il est connu qu'un mode répandu de tronçonnage des métaux et alliages ferreux très durs consiste à utiliser une meule résinoïde. Afin d'obtenir une coupe sans bavures il est souvent appliqué un arrosage abondant pendant le tronçonnage.

La pénétration de la meule, qui est lente, demande un effort qui est, sur les machines automatiques, fourni par un vérin hydraulique ou pneumatique régulé hydrauliquement. Pour limiter le temps de coupe au strict nécessaire, il faut donc arrêter la plongée de la meule dès que le tronçonnage est terminé et ne dégager celle-ci que sur une hauteur libérant la pièce tronçonnée afin de permettre l'introduction d'une nouvelle pièce.

Dans le cas où l'outil de coupe est une meule résinoïde dont le diamètre diminue avec l'usure, il faut naturellement tenir compte de ce paramètre variable.

Sur une machine automatique cette correction doit se faire automatiquement.

Les sytèmes actuellement connus pour détecter l'usure d'une meule de tronçonnage consistent à prendre l'information sur la meule elle-même, soit par l'intermédiaire d'une touche réalisée dans un matériau très dur tel que le diamant ou le carbure de tungstène, soit par un détecteur pneumatique de proximité, soit par une cellule photo-électrique.

Dans le premier cas, si la touche est dans une matière plus dure (diamant) que la meule on obtient une usure anormale de la meule, si la touche est dans une matière moins dure que la meule, celle-ci usera rapidement la touche.

Dans les deux autres cas, les cellules photo-électriques ou détecteurs pneumatiques sont fragiles, onéreux et peu fiables.

En effet, la poussière dégagée par le tronçonnage quand il a lieu à sec, ou, les projections de liquide d'arrosage quand le tronçonnage se fait par voie humide, créent des ordres intempestifs.

La présente invention propose un système mécanique simple détectant la fin du tronçonnage quelle que soit la réduction de diamètre due à l'usure de la meule et limitant la course de tronçonnage à la stricte valeur nécessaire pour obtenir le tronçonnage d'une pièce.

Le principe du système de rattrapage d'usure, objet de l'invention, s'applique particulièrement bien aux tronçonneuses dites sensitives composées essentiellement d'un bras oscillant avec broche porte-meule d'un côté de l'axe de tourillonnement et d'un moteur d'entrainement de l'autre, l'ensemble formant un système équilibré.

Dans l'invention le poids du bras oscillant côté meule l'emporte légèrement sur le poids côté moteur (la meule a donc tendance à descendre sur la pièce à tronçonner).

Le mouvement de pénétration de la meule dans la pièce est produit par l'action d'un vérin hydraulique ou pneumatique régulé hydrauliquement.

Quand la pièce est tronçonnée, la meule est ainsi libérée et continue sa descente sous l'action de la pesanteur à une vitesse plus rapide que celle qui lui a été communiquée par le vérin hydro-pneumatique.

La différence de vitesse de la tige du vérin par rapport au bras oscillant porte-meule se traduit par le coulissement d'une bague solidaire du bras par rapport à la tige du vérin. Ce déplacement relatif est saisi par un capteur qui donne l'ordre du relevage.

Par ailleurs, à la position basse de la meule correspond une position haute d'un étrier fixé sur la tige du vérin.

Une des branches de cet étrier détermine la position d'un coulisseau en frottement dur sur une tige. Le coulisseau se déplace en fonction de l'usure de la meule. L'autre branche de l'étrier viendra rencontrer au relevage un capteur solidaire du coulisseau qui commandera le blocage de la meule en position haute.

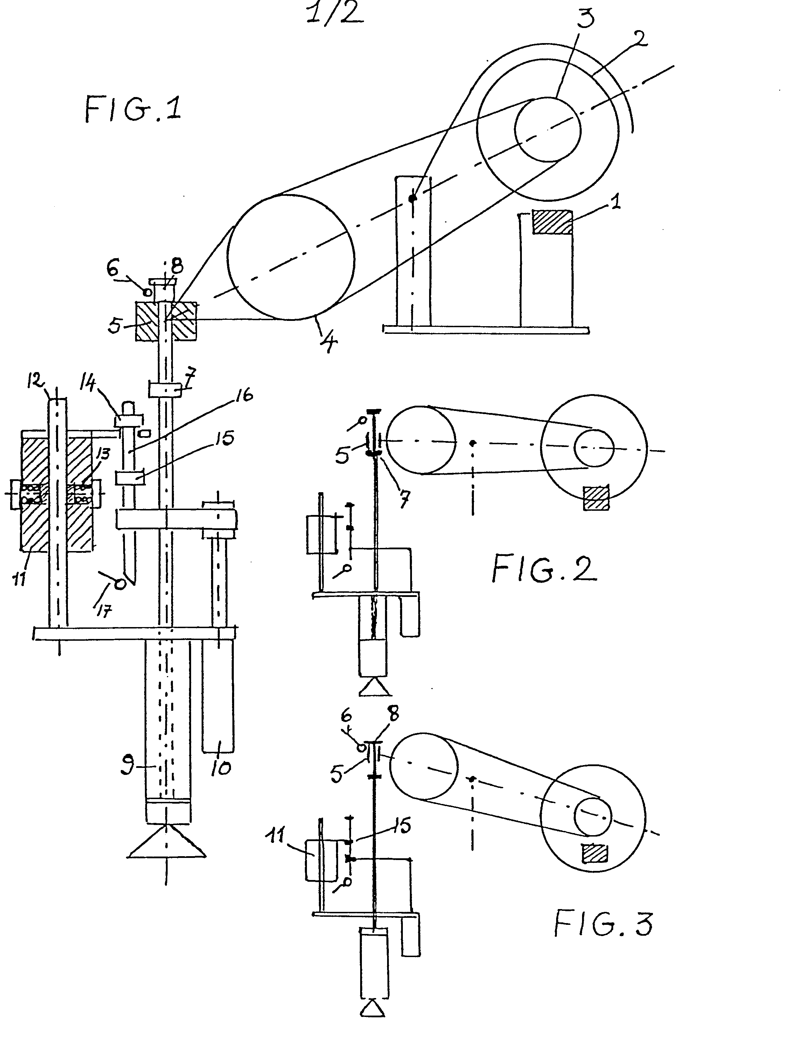

L'avantage de l'invention apparaitra plus clairement à la lecture de la description détaillée qui suit et qui est faite en référence aux dessins annexés dans lesquels :
- sur le plan 1/2, la figure 1 représente le schéma de l'installation, la meule étant au repos,
- la figure 2 représente l'ensemble, la meule étant entrain de tronçonner la pièce,
- la figure 3 représente l'ensemble à la fin du tronçonnage.
- Sur le plan 2/2, la figure 4 représente le schéma de branchement pneumatique des appareils nécessaires pour transmettre au vérin de commande les indications des capteurs.

D'après la figure 1 du plan 1/2, la pièce à tronçonner est représentée en 1, la meule 2 est figurée sur son bras oscillant, la poulie motrice 4 entraine la poulie réceptrice 3 par un renvoi de courroies, l'ensemble formant un système équilibré tel que le poids côté meule l'emporte légèrement sur le poids côté moteur.

Sur le bras oscillant est fixée une bague 5 par le moyen d'une articulation. A l'intérieur de cette bague coulisse la tige d'un vérin 9.

Ce vérin, articulé à sa base, peut être couplé avec un régulateur hydraulique 10 destiné à freiner à volonté la vitesse de sortie de la tige du vérin. La course de cette tige, à l'intérieur de la bague 5, est limitée par deux bagues 7 et 8.

Enfin sur la bague 5 est monté un capteur dont le galet est figuré en 6.

Parallèlement à l'axe du vérin, se trouve une tige 12 qui peut être par exemple un carré, un hexagone ou un rond avec rainure de clavetage, interdisant toute rotation autour de celle-ci.

Un coulisseau 11 est enfilé sur la tige 12 et maintenu en position grâce à un système de pression constitué, par exemple, par des ressorts venant appliquer des patins sur les faces de la tige hexagonale 12.

L'action de ces patins est destinée à éviter le déplacement du coulisseau sous l'action de la pesanteur ou des à-coups de la machine.

Sur l'arbre du vérin est monté un étrier 16 avec deux bagues 14 et 15. A la sortie de la tige du vérin, la bague 15 de l'étrier entraine le coulisseau vers le haut. A la rentrée de la tige du vérin, la bague 14 de l'étrier entraine la descente du coulisseau (lors du montage d'une meule neuve).

Au relevage de la meule la tige de l'étrier 16 vient rencontrer un capteur fixé sur le coulisseau 11. Le galet de ce capteur est repéré en 17.

Le principe de fonctionnement est le suivant :

La figure 1 montre la meule en position haute avant d'attaquer la pièce à tronçonner.

Dès que le vérin 9 reçoit l'ordre d'effectuer le tronçonnage, sa tige en sortant fait déposer délicatement la meule sur la pièce à tronçonner. La meule ne pénètre que très peu dans la pièce puisque le poids qui l'entraine vers le bas est faible.

La figure 2 montre la meule pendant le tronçonnage. La tige du vérin continuant à sortir, la bague 7 vient en contact avec l'articulation 5 ce qui force la pénétration de la meule dans la pièce.

la figure 3 montre la meule après le tronçonnage. La meule, qui ne rencontre plus d'effort résistant, tombe sous l'effet de la pesanteur, de telle sorte que la bague 8 en contact avec l'articulation 5, commande l'action du capteur 6.

Sur la figure 3, on voit qu'en fin de tronçonnage la bague 15 de l'étrier a fait déplacer le coulisseau 11.

Revenant à la figure 1 : la meule s'est relevée, la tige 16 a rencontré le capteur 17 qui a donné l'ordre à la meule de s'arrêter dans son déplacement vert le haut.

On notera que la distance entre la bague 15 et le capteur 17 est fonction de la hauteur de la pièce à tronçonner.

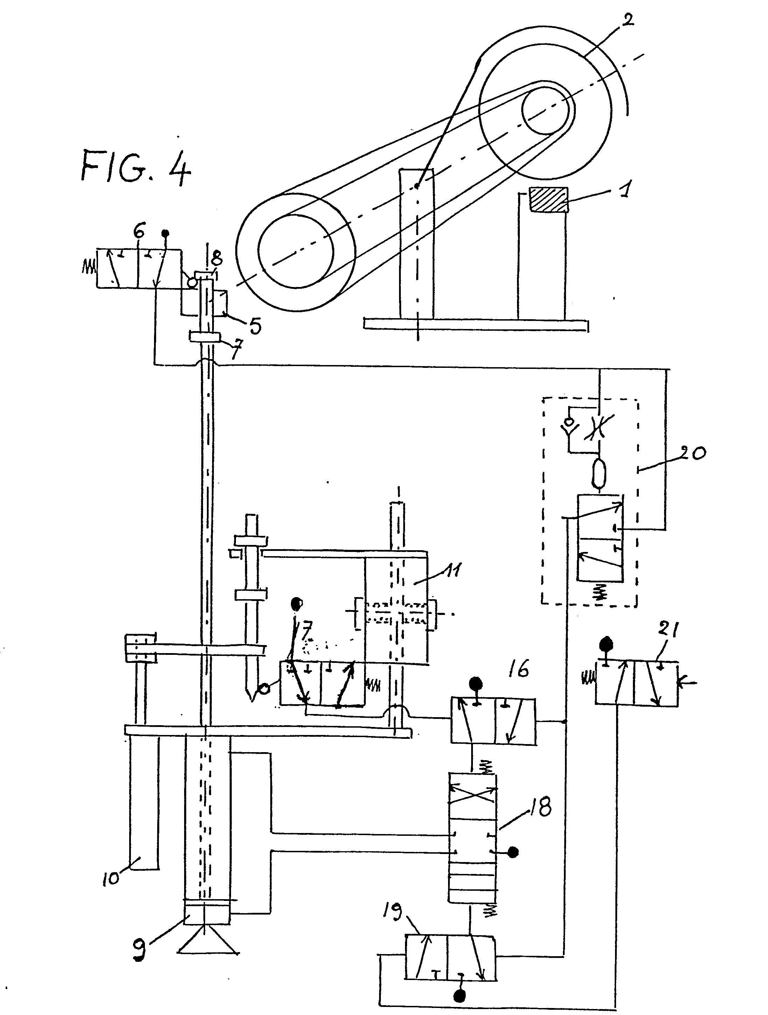

La figure 4 du plan 2/2 montre comment on peut raccorder les deux capteurs 6 et 17 pour obtenir un ensemble commandé pneumatiquement.

L'ordre de descente est donné au distributeur à commande mécanique 21, l'air est envoyé dans la mémoire 19 qui envoie une impulsion au distributeur à blocage 18.

Ce distributeur commande la sortie de la tige du vérin. Pendant la sortie de cette tige, le capteur 6 s'arme et, à la fin du tronçonnage, il envoie une impulsion aux mémoires 16 et 19. Grâce à l'action du temporisateur 20, cette impulsion est coupée au bout d'un temps réglable.

La mémoire 16 communique au distributeur à blocage 18 l'ordre de relevage de la meule. En fin de relevage, le capteur 17 met la mémoire 16 à l'échappement et le distributeur 18 &tant à l'échappement des deux côtés de pilotage, il se met en position médiane ce qui bloque le vérin 9.

REVENDICATIONS

1. Système caractérisé principalement par le fait que le tronçonnage étant terminé, la meule est libérée et tend à se déplacer vers le bas d'un mouvement plus rapide que celui qui anime la tige du vérin de commande, cette différence de vitesse est détectée par un capteur qui commande la remontée de la meule.

2. Système selon la revendication 1 caractérisé par le fait que la tige du vérin commandant le déplacement de la meule, est solidaire d'un étrier qui déplace un coulisseau au fur et à mesure de l'usure de la meule.

3. Système selon la revendication 2 selon lequel l'étrier rencontre au relevage de la meule un capteur solidaire du coulisseau limitant la course de relevage à une hauteur pré-réglée d'après la hauteur de la pièce à tronçonner.

4. Système selon les revendications 1 à 3 selon lequel sur un bras oscillant le poids côté meule de tronçonnage l'emporte légèrement sur le poids côté moteur de commande, c'est à dire que la meule a tendance à se rapprocher de la pièce à tronçonner.

5. Système selon la revendication 4 tel que, dès que l'ordre de tronçonnage est donné, la tige du vérin de commande sort lentement et accompagne la meule en rotation qui se pose délicatement sur la pièce à tronçonner.

6. Système selon la revendication 5 tel que la tige du vérin de commande après avoir posé la meule sur la pièce à tronçonner force la pénétration de la meule dans la pièce.

0082227

FIG.1

FIG.2

FIG.3

FIG. 4

**Office européen des brevets**

## RAPPORT DE RECHERCHE EUROPEENNE

Numéro de la demande

EP 81 40 2025.1

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernee | |
| A | US - A - 2 836 015 (A.R. STONE) <br> * colonne 1, lignes 46 à 53; colonne 3, ligne 33 à colonne 4, ligne 57; fig. 1 à 4 * <br> -- | 1 | B 24 B 27/06 |
| A | DD - A - 50 452 (K. LATTERMANN et al.) <br> * colonne 1, ligne 19 à colonne 2, ligne 14; fig. 3 * <br> -- | 1 | |
| A | US - A - 3 241 265 (H. WING) <br> * colonne 2, lignes 32 à 41; colonne 3, lignes 40 à 46; fig. 1, 3 * <br> -- | 4 | **DOMAINES TECHNIQUES RECHERCHES (Int. Cl ³)** <br><br> B 23 D 45/26 |
| A | US - A - 2 693 057 (A.B. EASTWOOD) <br> -- | | B 24 B 27/00 <br> B 24 B 47/22 |
| A | FR - A1 - 2 274 400 (S.A. AUTOMOBILES CITROEN) <br><br> ---- | | B 24 B 49/00 |

**CATEGORIE DES DOCUMENTS CITES**

X: particulièrement pertinent à lui seul
Y: particulièrement pertinent en combinaison avec un autre document de la même categorie
A arriere-plan technologique
O divulgation non-ecrite
P document intercalaire
T theorie ou principe a la base de l invention
E document de brevet anterieur mais publie a la date de depot ou apres cette date
D cite dans la demande
L cite pour d autres raisons
& membre de la meme famille, document correspondant

| | | |
|---|---|---|
| ✗ | Le present rapport de recherche a ete etabli pour toutes les revendications | |
| Lieu de la recherche <br> Berlin | Date d achevement de la recherche <br> 14-07-1982 | Examinateur <br> MARTIN |

OEB Form 1503.1   06.78